# EUROPEAN PATENT SPECIFICATION

(11) **EP 1 043 410 B1**
(45) Date of publication and mention of the grant of the patent: **14.05.2003**
(21) Application number: 00105056.6
(22) Date of filing: 09.03.2000
(51) Int. Cl.: C22C 1/05, C22C 1/04, B22F 7/06

(54) **Method of making porous cubic boron nitride based material suitable for subsequent production of cutting tools**
Verfahren zur Herstellung von poröser Werkstoff basiert auf kubischem Bornitrid geeignet zur nachträglichen Herstellung von Schneidwerkzeuge
Méthode de production d'un matériau poreux à base de nitrure de bore cubique approprié pour la production ultérieure d'outils de coupe

(30) Priority: 07.04.1999 SE 9901222
(43) Date of publication of application: 11.10.2000
(73) Proprietor: SANDVIK AKTIEBOLAG, 811 81 Sandviken (SE)
(72) Inventor: Rolander, Ulf, 11264 Stockholm (SE); Weinl, Gerold, 12552 Älvsjö (SE)
(74) Representative: Taquist, Lennart

(56) References cited:
- EP-A- 0 211 247
- EP-A- 0 230 233
- WO-A-98/03691
- US-A- 4 224 380
- US-A- 4 770 907
- US-A- 5 676 496

## Description

The present invention relates to a method of making tools with cutting edges formed of polycrystalline cubic boron nitride (PCBN) which are bonded to a body of cemented carbide or cermet.

Cutting tools having cutting edges formed of a superhard abrasive such as a cubic boron nitride (cBN) based material are manufactured by powder metallurgical techniques and are mainly used for the machining of cast iron and hardened steel. For cast iron a tough material with 80-100 wt% cBN is used, while for hardened steel 10-50 wt% of TiC, TiN or Ti(C,N) is usually added. This decreases toughness but greatly improves the chemical stability of the material. Most often, the PCBN material also contains smaller amounts (typically <10 wt% of each, in total <25 wt%) of other components, e.g. Co, Ni, WC, Al, AlN, Al₂Co₉ and Al₂O₃. These are either added to the raw material powder or obtained during processing.

PCBN cutting tools are mainly produced in two different ways:
i) By high pressure/high temperature (HP/HT) sintering a PCBN powder mixture into a solid body that is cut and ground into a finished cutting tool insert.
ii) By HP/HT sintering a thin layer of PCBN powder which simultaneously bonds to a substrate (usually a cemented carbide disc), from which smaller pieces (chips) are cut out. These chips are brazed onto a regular cemented carbide tool (e.g. insert, endmill, drill) and ground to finished state. The tools are relatively expensive to produce due to the many steps the product must undergo before it is finished. Also, usually only one or two cutting edges per tool are available.

EP-A-230233 discloses a process for making a composite polycrystalline diamond or cubic boron nitride (CBN) compact. The process is conducted by mating a pre-formed sintered polycrystalline diamond or CBN compact and a plastically deformable support, and subjecting the mated composite compact to elevated temperature and pressure conditions sufficient to plastically deform the support into attachment with the compact. The temperature, pressure and time of application are adequate not to cause degradation of the diamond or CBN compact. The product configuration may be a conventional layered compact or may be a wire drawing die having a polycrystalline diamond or CBN core with a support jacket of a material such as cemented carbide.

Through US 5,676,496 a technique is known for producing PCBN cutting tool inserts in a more cost efficient way. This is achieved by placing a cemented carbide or cermet substrate into a container and then packing PCBN powder into appropriately placed grooves in the substrate. The container is then HP/HT-sintered so that the PCBN powder is consolidated to a fully dense body, which is simultaneously bonded to the substrate. The substrate/PCBN compound may then directly be ground to a cutting tool insert. The main advantages with this technique are:
1. The brazing step is eliminated.
2. The number of cutting edges per insert can be increased at a limited added production cost.

Although the method described leads to extensive cost reductions per cutting edge, it has one major drawback in that the packing of PCBN powder into the grooves in principle must be done manually. The poor flow properties of PCBN powder in combination with the required groove geometry make automatic processing unreliable. Apart from obvious health hazards, manual packing may lead to uneven packing density and to excessive oxygen exposure of the PCBN powder. Uneven packing density makes it necessary to choose a larger groove dimension than desired to ensure that the amount of PCBN obtained is always sufficient. Careful control of the oxygen content in the PCBN powder is critical for the HP/HT sintering since excessive oxygen affects the consolidation process negatively. In principle, one would like to have a high and highly reproducible packing density and minimize the oxygen pickup during handling and storage.

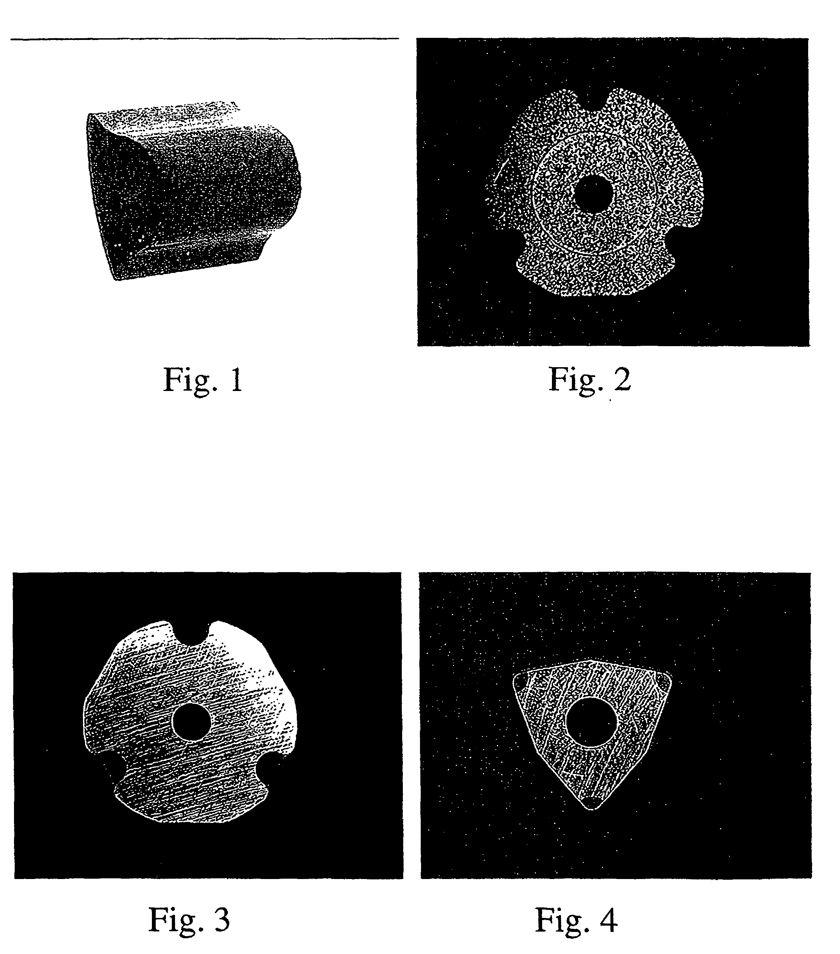

Figs 1 - 4 illustrate the invention.

It has quite surprisingly been found that a green body of cBN based material may be presintered in a vacuum sintering process at relatively high temperature to obtain a porous body with reasonable strength and well defined shape. With a proper choice of sintering conditions the material does not undergo phase transformations detrimental for subsequent HP/HT sintering or cutting tool performance. In particular, excessive phase transformation of the metastable cBN grains into e.g. hexagonal boron nitride (hBN) or metal borides and nitrides can be avoided. Furthermore, the presintering process can be designed to include dewaxing, oxygen reduction and, optionally, nitrification of the green body.

According to the invention there is provided a powder metallurgical method of producing the material described above, comprising the following steps:
1. Mixing raw material powders i.e. cBN and one or more of hBN(hexagonal boron nitride), TiC, TiN, Ti(C,N), WC, W, C, Co, Co₂Al₉, Al, AlN, Al₂O₃ with a liquid (e.g. ethanol) and a pressing agent (e.g. polyethylene glycol, PEG) to form a homogeneous slurry with desired composition. The amount of TiC+TiN+Ti(C,N) is <50 wt% and the amount of other additions is <25 wt-%.
2. Forming powder agglomerates, typically 100 µm in diameter, preferably using the spray drying technique.
3. Forming a green body with desired dimensions and density using conventional tool pressing technology.
4. Removing the pressing agent from the green bodies at a temperature and atmosphere suitable for the chosen pressing agent (preferably 200-400 °C in flowing hydrogen for PEG).
5. Removing oxygen from the raw material grain surfaces by raising the temperature to 1000-1350 °C in vacuum.
6. Solid state sintering the material at 1000-1350 °C in vacuum, for 1-90 minutes to obtain the desired strength.
7. Optionally, adding 0.5-1000 mbar of nitrogen to the sintering atmosphere at the hold time or during cooling to compensate for the loss of interstitial elements obtained during oxygen removal.
8. Subjecting the sintered porous body to an HP/HT treatment to obtain a dense PcBN body of desired shape and dimensions e.g. a cutting tool insert. During this treatment the porous body may alternatively be in contact with a sintered body of cemented carbide or cermet and during the HP/HT treatment be attached to it and form a composite body, again e.g. a cutting tool.
It is obvious that the method according to the invention can be used to make inserts of other types than those according to US 5,676,496 as well as tools or tool bodies of solid PCBN with complicated shape e.g. inserts with chip breaker or with a central hole for clamping.

### Example 1

A cutting tool insert according to US 5,676,496 was made according to the invention. 57 wt% cBN, 35 wt% Ti(C_{0.5},N_{0.5}) and 8 wt% Co₂Al₉ were first attritor-milled for 60 minutes using cemented carbide milling bodies to obtain a homogeneous powder mixture. 6.5 wt% polyethylene glycol, PEG, was then added and the powder mixed in ethanol to a homogeneous slurry. The slurry was dried using the spray drying technique to a powder with an average agglomerate size of about 100 µm and good flow properties. The powder was pressed to bodies with desired dimensions using conventional tool pressing technology. The pressing was done at the highest possible compaction pressure without jeopardizing the press tool in order to obtain a high green body density. The pressing agent was removed from the green bodies at 200-320 °C in flowing hydrogen. The temperature was increased to 1050 °C at 10 °C/min in vacuum and then further increased to 1300 °C at 2 °C/min in vacuum. During the temperature ramps, oxygen leaves the green body as carbonmonoxide and there is also some loss of nitrogen. Solid state sintering of the material took place at 1300 °C in vacuum for 30 minutes. The furnace was then allowed to cool down to room temperature in flowing argon gas.

After solid state sintering the dimensions and density of the bodies were measured. The dimensions were slightly larger than for the green body, corresponding to a linear expansion of about 1 %. The density was 2.33 g/cm³ compared to 2.50 g/cm³ for the green body. This corresponds to a weight loss of 6.5 wt% PEG and 0.7 wt% of carbon monoxide and nitrogen. Considering that the theoretical density for a fully dense body with the composition above is 3.93 g/cm³, including inevitable pick-up of tungsten carbide (WC) and cobalt (Co) originating from the milling bodies, the density of the solid state sintered body corresponds to 41 vol% porosity. This is a relatively low value for tool pressed bodies with the pressing agent removed, presumably due to the high compaction pressure used. Typical values for e.g. tool-pressed cemented carbide bodies lie in the range 35-60 vol% porosity.

Due to the loss of 0.7 wt% interstitials the surfaces of the grains in contact with the porosity will be highly substoichiometric. This can be a problem since these surfaces may reoxidise during prolonged storage. However, by adding nitrogen to the sintering atmosphere, preferably at the end of the hold time at temperature, these surfaces will be nitrided and the stoichiometry in this way increased. This substantially decreases the risk of reoxidation.

The sintered PCBN body was then used to manufacture a cutting tool insert as illustrated in figs 1-4 which shows the manufacture of an insert according to the above mentioned US 5,676,496.

Figure 1 shows a presintered body obtained. This particular body has a cylindrical shape with a complex cross section and fits snugly into the grooves of the cemented carbide substrate shown in figure 2 which shows a sintered cemented carbide substrate intended for the production of a cutting tool insert with six PCBN cutting edges. Three grooves are placed symmetrically along the periphery. From each groove two cutting edges are obtained, one on each side of the substrate.

The presintered bodies were placed in the grooves of the cemented carbide substrate of figure 2, placed in a container and subjected to a HP/HT treatment at about 50 kbar and 1450 °C for 20 minutes. Figure 3 shows the substrate and PCBN blank after HP/HT sintering and removal of the container material from the top side. The porous presintered bodies which were placed in the grooves had collapsed into the grooves and formed fully dense PCBN material strongly bonded to the inner walls of the grooves. Finally, the blank was ground to a WNGA style insert with six cutting edges, figure 4.

## Claims

1. Method of making a PCBN cutting tool insert comprising the steps of
- mixing raw material powders of cBN and one or more of hBN (hexagonal boron nitride), TiC, TiN, Ti(C,N), WC, W, C, Co, Co₂Al₉, Al, AlN, Al₂O₃ with a liquid and a pressing agent to form a homogeneous slurry with desired composition
- forming powder agglomerates typically 100 µm in diameter
- forming a body with desired dimensions and density using conventional tool pressing technology.
- removing the pressing agent from the body at a suitable temperature and atmosphere
- raising the temperature to 1000-1350 °C in vacuum.
- solid state sintering the body at 1000-1350 °C in vacuum for 1-90 minutes to form a body with 35-55 vol-% porosity
- optionally, adding 0.5-1000 mbar of nitrogen to the sintering atmosphere at the hold time or during cooling and
- HP/HT treating the porous body to form a dense body of desired shape and dimension.

2. Method according to the preceding claim comprising the step of placing said porous PCBN body in contact with a cemented carbide or cermet body and attaching it thereto by the HP/HT-treatment.

3. Method according to any of the preceding claims **characterized in that** said liquid is ethanol.

4. Method according to any of the preceding claims **characterized in that** said pressing agent is polyethylene glycol, PEG.

5. Method according to any of the preceding claims **characterized in that** said forming of powder agglomerates is made by spray drying.

## Patentansprüche

1. Verfahren zur Herstellung eines PCBN-Schneidwerkzeugeinsatzes mit den Stufen, in denen man
- Rohmaterialpulver von cBN und einem oder mehreren von hBN (hexagonales Bornitrid), TiC, TiN, Ti(C,N), WC, W, C, Co, Co₂Al₉, Al, AIN, Al₂O₃ mit einer Flüssigkeit und einem Pressmittel unter Bildung eines homogenen Schlammes mit erwünschter Zusammensetzung vermischt,
- Pulveragglomerate, typischerweise mit einem Durchmesser von 100 µm, bildet,
- einen Körper mit erwünschten Abmessungen und erwünschter Dichte unter Verwendung herkömmlicher Werkzeugpresstechnologie bildet,
- das Pressmittel aus dem Körper bei einer geeigneten Temperatur und Atmosphäre entfernt,
- die Temperatur auf 1000 bis 1350 °C im Vakuum steigert,
- den Körper bei 1000 bis 1350 °C im Vakuum während 1 bis 90 min unter Bildung eines Körpers mit 35 bis 55 Vol.% Porosität im festen Zustand sintert,
- gegebenenfalls 0,5 bis 1000 mbar Stickstoff der Sinteratmosphäre bei der Haltezeit oder während des Kühlens zusetzt und
- HP/HAT-Behandlung des porösen Körpers vornimmt, um einen dichten Körper erwünschter Form und Abmessung zu bilden.

2. Verfahren nach dem vorausgehenden Anspruch mit der Stufe, in der man den porösen PCBN-Körper in Berührung mit einem Hartmetall- oder Cermetkörper anordnet und ihn daran durch die HP/HAT-Behandlung befestigt.

3. Verfahren nach einem der vorausgehenden Ansprüche, **dadurch gekennzeichnet, dass** die Flüssigkeit Ethanol ist.

4. Verfahren nach einem der vorausgehenden Ansprüche, **dadurch gekennzeichnet, dass** das Pressmittel Polyethylenglycol (PEG) ist.

5. Verfahren nach einem der vorausgehenden Ansprüche, **dadurch gekennzeichnet, dass** die Bildung von Pulveragglomeraten durch Sprühtrocknung erfolgt.

## Revendications

1. Procédé de fabrication d'une plaquette d'outil de coupe PCBN comprenant les étapes consistant à
- mélanger des poudres de matière brute cBN et une ou plusieurs poudre parmi le hBN (nitrure de bore hexagonal), TiC, TiN, Ti(C,N), WC, W, C, Co, Co₂Al₉, Al, AlN, Al₂O₃ avec un liquide et un agent de pressage afin de former une suspension homogène avec la composition souhaitée ;
- former des agglomérats de poudre, typiquement de 100 µm de diamètre ;
- former un corps avec les dimensions et la masse volumique souhaitées en utilisant une technologie de pressage d'outil classique ;
- éliminer l'agent de pressage du corps à une température et une atmosphère appropriées ;
- élever la température entre 1000°C et 1350°C sous vide ;
- fritter à l'état solide le corps entre 1000°C et 1350°C sous vide ;
- éventuellement, ajouter entre 0,5 et 1000 mbar d'azote à l'atmosphère de frittage pendant le temps de maintien ou au cours du refroidissement ; et
- soumettre le corps poreux fritté à un traitement HP/HT pour former un corps dense de forme et de dimensions souhaitées.

2. Procédé selon la revendication précédente comprenant les étapes consistant à placer ledit corps PCBN poreux en contact avec un corps de carbure cémenté ou de cermet et à l'y fixer au moyen du traitement HP/HT.

3. Procédé selon l'une quelconque des revendications **caractérisé en ce que** ledit liquide est l'éthanol.

4. Procédé selon l'une quelconque des revendications **caractérisé en ce que** ledit agent de pressage est le polyéthylèneglycol, PEG.

5. Procédé selon l'une quelconque des revendications **caractérisé en ce que** ladite formation d'agglomérats de poudre est réalisée au moyen d'un séchage par pulvérisation.
